# EUROPÄISCHE PATENTANMELDUNG

(11) **EP 3 451 155 A1**
(43) Veröffentlichungstag der Anmeldung: **06.03.2019**
(21) Anmeldenummer: 18187808.3
(22) Anmeldetag: 07.08.2018
(51) Int. Cl.: G06F 8/654

(54) **VERFAHREN ZUM WECHSELN AUF EINE FIRMWARE-VERSION AUF EINEM ELEKTRISCHEN STEUERGERÄT FÜR EIN ANTRIEBSSYSTEM, ELEKTRISCHES STEUERGERÄT UND ANTRIEBSSYSTEM**

(30) Priorität: 29.08.2017 DE 102017215044
(71) Anmelder: Lenze Automation GmbH, 31855 Aerzen (DE)
(72) Erfinder: Just, Nikolai, 32657 Lemgo (DE)
(74) Vertreter: Patentanwälte Ruff, Wilhelm, Beier, Dauster & Partner mbB

(57) **Zusammenfassung**

Verfahren zum Wechseln auf eine Firmware-Version (FV2) auf einem elektrischen Steuergerät (20) für ein Antriebssystem (10), wobei das elektrische Steuergerät (20) zum Ausführen eines bestehenden Anwendungsprogramms (AP) zum Betreiben des Antriebssystems (10) geeignet ist und auf dem elektrischen Steuergerät (20) eine andere Firmware-Version (FV1) in Betrieb ist, wobei das Verfahren die Schritte aufweist:
- a) Überprüfen des bestehenden Anwendungsprogramms (AP) auf Kompatibilität mit der einen Firmware-Version (FV2) durch ein Skript (SC), und
- b) falls das bestehende Anwendungsprogramm (AP) mit der einen Firmware-Version (FV2) kompatibel ist, Wechseln von der anderen Firmware-Version (FV1) auf die eine Firmware-Version (FV2) auf dem elektrischen Steuergerät (20).

## Beschreibung

Die Erfindung bezieht sich auf ein Verfahren zum Wechseln auf eine Firmware-Version auf einem elektrischen Steuergerät für ein Antriebssystem, ein elektrisches Steuergerät und ein Antriebssystem mit einem elektrischen Steuergerät.

Ein Verfahren zum Wechseln auf eine Firmware-Version auf einem elektrischen Steuergerät für ein Antriebssystem, ein elektrisches Steuergerät und ein Antriebssystem mit einem elektrischen Steuergerät sind bekannt.

### AUFGABE UND LÖSUNG

Der Erfindung liegt als Aufgabe die Bereitstellung eines Verfahrens zum Wechseln auf eine Firmware-Version auf einem elektrischen Steuergerät für ein Antriebssystem zugrunde, das Probleme beim Wechsel verringert oder sogar ganz vermeidet und/oder relativ anwenderfreundlich ist. Des Weiteren liegt der Erfindung als Aufgabe die Bereitstellung eines elektrischen Steuergeräts zum Ausführen des Verfahrens und eines Antriebssystems mit einem elektrischen Steuergerät zum Ausführen des Verfahrens zugrunde.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein elektrisches Steuergerät mit den Merkmalen des Anspruchs 10 und ein Antriebssystem mit den Merkmalen des Anspruchs 11 gelöst. Vorteilhafte Weiterbildungen und/oder Ausgestaltungen der Erfindung sind in den abhängigen Ansprüchen beschrieben.

Das erfindungsgemäße, insbesondere automatische, Verfahren zum Wechseln oder Ändern auf eine Firmware-Version auf einem elektrischen Steuergerät für ein, insbesondere elektrisches, Antriebssystem. Das elektrische Steuergerät ist zum Ausführen eines bestehenden Anwendungsprogramms zum Betreiben des Antriebssystems, insbesondere generell, geeignet. Auf dem elektrischen Steuergerät ist eine andere Firmware-Version in Betrieb. Das Verfahren weist die Schritte auf: a) Überprüfen, insbesondere automatisches Überprüfen, des bestehenden Anwendungsprogramms auf Kompatibilität mit der einen Firmware-Version durch ein Skript. b) falls oder wenn das bestehende Anwendungsprogramm mit der einen Firmware-Version kompatibel ist, Wechseln, insbesondere automatisches Wechseln, oder Ändern von der anderen Firmware-Version auf die eine Firmware-Version auf dem elektrischen Steuergerät.

Firmware kann typischerweise Software sein, die in das elektrische Steuergerät eingebettet sein kann. Die Firmware kann beispielsweise in einem Flash-Speicher, einem EPROM, EEPROM oder ROM des elektrischen Steuergeräts gespeichert sein und durch einen Anwender oder Benutzer nicht oder nur mit speziellen Mitteln beziehungsweise Funktionen wechselbar oder austauschbar sein. Der Begriff Firmware rührt daher, dass die Firmware funktional fest (firm) mit der Hardware, insbesondere des elektrischen Steuergeräts, verbunden sein kann. Die Firmware kann typischerweise eine Zwischenstellung zwischen einer Hardware des elektrischen Steuergeräts und dem Anwendungsprogramm, welches gegebenenfalls relativ einfach wechselbar oder austauschbar sein kann, einnehmen.

Der Wechsel von der anderen Firmware-Version auf die eine Firmware-Version kann nützlich sein, wenn mit der einen Firmware-Version Fehler der anderen Firmware-Version behoben oder neue Funktionen nachgerüstet sein können. Die eine Firmware-Version kann höher oder neuer als die andere oder alte Firmware-Version sein. In diesem Fall kann der Wechsel als Upgrade oder Aktualisierung bezeichnet werden. Jedoch kann das bestehende Anwendungsprogramm mit der einen Firmware-Version nicht kompatibel sein. Dann sollte nicht von der anderen Firmware-Version auf die eine Firmware-Version gewechselt werden. Insbesondere kann das bestehende Anwendungsprogramm auf der anderen Firmware-Version basieren.

Zusätzlich oder alternativ kann der Wechsel von der anderen Firmware-Version auf die eine Firmware-Version nützlich sein, wenn das bestehende Anwendungsprogramm mit der anderen Firmware-Version nicht kompatibel ist. Insbesondere kann die andere Firmware-Version höher oder neuer als die eine oder alte Firmware-Version sein. In diesem Fall kann der Wechsel als Downgrade bezeichnet werden. Beispielsweise kann das elektrische Steuergerät ein Ersatz-Steuergerät sein, welches mit der anderen oder neusten Firmware-Version ausgeliefert worden sein kann. Insbesondere kann das bestehende Anwendungsprogramm auf der einen oder alten Firmware-Version basieren.

Das Verfahren ermöglicht Probleme beim Wechsel zu verringern oder sogar ganz zu vermeiden. Somit ist das Verfahren relativ anwenderfreundlich.

Insbesondere kann mit und/oder nach dem Wechsel die eine Firmware-Version auf dem elektrischen Steuergerät in Betrieb sein, insbesondere anstatt der anderen Firmware-Version. Zusätzlich kann die andere Firmware-Version von dem elektrischen Steuergerät gelöscht oder entfernt werden oder sein, insbesondere nach der Inbetriebnahme der einen Firmware-Version.

Des Weiteren kann mit und/oder nach dem Wechsel auf die eine Firmware-Version auf dem elektrischen Steuergerät dieses zum Ausführen des bestehenden Anwendungsprogramms zum Betreiben des Antriebssystems ausgebildet sein. Insbesondere kann das elektrische Steuergerät einen Mikroprozessor und/oder ein Field Programmable Gate Array (FPGA) zum Ausführen des bestehenden Anwendungsprogramms aufweisen.

Das bestehende Anwendungsprogramm kann als Anwendungssoftware, Applikation, insbesondere Kundenapplikation, oder Steuerprogramm bezeichnet werden. Das Anwendungsprogramm kann anwendungsspezifisch oder anwendungsindividualisiert oder kundenspezifisch sein. Insbesondere kann das Anwendungsprogramm ein SPS-basiertes Programm sein (SPS: Speicherprogrammierbare Steuerung).

Das Skript kann dazu ausgebildet sein, eine Version und/oder eine andere Metainformation des bestehenden Anwendungsprogramms und/oder das Anwendungsprogramm selbst mindestens teilweise auszulesen und anhand dessen die Kompatibilität zu überprüfen. In anderen Worten: in dem Skript kann hinterlegt sein, welche Firmware-Version mit welcher Anwendungsprogramm-Version kompatibel sein kann oder ist.

Das bestehende Anwendungsprogramm kann auf oder in dem elektrischen Steuergerät, insbesondere auf einem Wechselspeichermedium wie einer SD-Karte in dem Steuergerät, vorhanden oder gespeichert sein. Zusätzlich oder alternativ kann das bestehende Anwendungsprogramm auf einer SPS (englisch: Programmable Logic Controller, PLC) vorhanden sein, welche mit dem elektrischen Steuergerät in Datenverbindung stehen kann.

Außerdem kann das elektrische Steuergerät Bestandteil des Antriebssystems sein. Zusätzlich oder alternativ kann das Antriebsystem Bestandteil einer Anlage sein, insbesondere einer Produktionsanlage.

Falls das bestehende Anwendungsprogramm mit der einen Firmware-Version nicht kompatibel ist, kann eine Kompatibilitätsproblemmeldung ausgegeben werden, insbesondere an den Anwender.

Der Schritt b) kann zeitgleich mit dem Schritt a) und/oder zeitlich nach diesem ausgeführt werden.

In einer Weiterbildung der Erfindung wird im Schritt a) das Skript auf dem elektrischen Steuergerät, insbesondere automatisch, ausgeführt. Das Ausführen kann von einem Wartungs-PC oder Engineering-PC, insbesondere von dem Anwender, ausgelöst werden, wobei der Wartungs-PC mit dem elektrischen Steuergerät in Datenverbindung stehen kann.

In einer Weiterbildung der Erfindung weist das Verfahren den Schritt auf: Wechseln auf das Skript in einer Skript-Version, welche der einen Firmware-Version zugeordnet ist, von einem anderen Skript in einer anderen Skript-Version, welche der anderen Firmware-Version zugeordnet ist. Der Schritt a) weist auf: Überprüfen, insbesondere automatisches Überprüfen, durch das Skript in der einen Skript-Version. Insbesondere kann die andere Skript-Version auf dem elektrischen Steuergerät vorhanden sein. Zusätzlich kann die andere Skript-Version von dem elektrischen Steuergerät gelöscht werden und/oder sein. Die eine Skript-Version kann der einen Firmware-Version entsprechen beziehungsweise diese können versionsgleich sein. Die andere Skript-Version kann der anderen Firmware-Version entsprechen.

In einer Weiterbildung der Erfindung ist das Skript in einer der einen Firmware-Version entsprechenden oder höheren Skript-Version. Dies ermöglicht, dass das Skript die eine Firmware-Version kennen kann beziehungsweise in dem Skript eine Information, insbesondere eine Kompatibilitätsinformation, über die eine Firmware-Version hinterlegt sein kann. Zusätzlich kann das Skript die andere Firmware-Version kennen beziehungsweise in dem Skript kann eine Information, insbesondere eine Kompatibilitätsinformation, über die andere Firmware-Version hinterlegt sein kann. Insbesondere kann die eine Firmware-Version höher als die andere Firmware-Version sein.

In einer Weiterbildung der Erfindung sind die eine Firmware-Version und die andere Firmware-Version in einer Anzahl von Partitionen und/oder einer Größe einer der Anzahl von Partitionen und/oder einem Zugriffsrecht einer der Anzahl von Partitionen und/oder einem Inhalt einer der Anzahl von Partitionen voneinander verschieden oder unterschiedlich. Insbesondere kann das Skript dazu ausgebildet sein, eine Verschiedenheit oder einen Unterschied zwischen den Firmware-Versionen zu erkennen, insbesondere durch mindestens teilweises Auslesen der Anzahl von Partitionen, und zu überprüfen, ob der Unterschied der einen Firmware-Version zu der anderen Firmware-Version ein Kompatibilitätsproblem mit dem bestehenden Anwendungsprogramm verursachen kann oder wird oder ob der Unterschied für das, insbesondere problemlose, Ausführen des bestehenden Anwendungsprogramms irrelevant sein kann oder wird oder ist.

In einer Weiterbildung der Erfindung weist das Verfahren den Schritt auf: Bereitstellen, insbesondere automatisches Bereitstellen, einer Paket-Version. Die eine Paket-Version weist das Skript und die eine Firmware-Version auf. Der Schritt a) weist auf: Überprüfen, insbesondere automatisches Überprüfen, durch das bereitgestellte Skript. Somit kann alles für den Wechsel Erforderliche oder Benötigte auf einmal bereitgestellt werden oder sein. Dies kann ermöglichen, dass der Anwender nicht das Skript zu der Firmware-Version zu suchen oder auszuwählen braucht. Die eine Paket-Version kann auf einem Server beziehungsweise in einer Cloud und/oder auf einem Wartungs-PC bereitgestellt werden oder sein. Insbesondere kann das Skript in einer Skript-Version sein, welche der einen Firmware-Version entsprechen kann.

In einer Ausgestaltung der Erfindung weist das Verfahren den Schritt auf: Übertragen der einen Paket-Version auf das elektrische Steuergerät. Der Schritt a) weist auf: Überprüfen, insbesondere automatisches Überprüfen, durch das übertragene Skript. Somit wird die Paket-Version auf dem elektrischen Steuergerät bereitgestellt. Insbesondere kann dies ermöglichen, dass nur ein einziges Mal auf das Steuergerät übertragen zu werden braucht. Anders formuliert: das Skript und die eine Firmware-Version brauchen nicht getrennt voneinander auf das Steuergerät zu übertragen werden. Die eine Paket-Version kann von einem Server beziehungsweise einer Cloud und/oder einem Wartungs-PC und/oder einem Wechselspeichermedium übertragen werden.

In einer Weiterbildung der Erfindung weist der Schritt a) auf: Überprüfen, insbesondere automatisches Überprüfen, des elektrischen Steuergeräts auf Kompatibilität mit der einen Firmware-Version durch das Skript. Der Schritt b) weist auf: falls oder wenn das elektrische Steuergerät mit der einen Firmware-Version kompatibel ist, Wechseln, insbesondere automatisches Wechseln, von der anderen Firmware-Version auf die eine Firmware-Version auf dem elektrischen Steuergerät. Insbesondere kann das Skript dazu ausgebildet sein, eine Version und/oder eine andere Metainformation des elektrischen Steuergeräts beziehungsweise seiner Hardware auszulesen und anhand dessen die Kompatibilität zu überprüfen. In anderen Worten: in dem Skript kann hinterlegt sein, welche Firmware-Version mit welchem Steuergerät und/oder welcher Steuergerät-Version kompatibel sein kann oder ist. Falls das elektrische Steuergerät mit der einen Firmware-Version nicht kompatibel ist, kann eine Kompatibilitätsproblemmeldung ausgegeben werden, insbesondere an den Anwender.

In einer Weiterbildung der Erfindung ist das elektrische Steuergerät ein Frequenzumrichter, ein Servoumrichter, ein Motion Controller oder ein Visu-Controller. Typischerweise sind Motion Controller elektrische Steuergeräte zur Bewegungsregelung oder Bewegungssteuerung, mittels denen eine Pose, eine Geschwindigkeit, eine Beschleunigung oder einer Kombination daraus beeinflusst werden kann. Typische Anwendung ist beispielsweise die Punkt-zu-Punkt-Positionsregelung und die Drehzahlregelung. Typischerweise sind Visu-Controller elektrische Steuergeräte, welche zur IPC-Visualisierung ausgebildet sein können.

Des Weiteren bezieht sich die Erfindung auf ein elektrisches Steuergerät. Das erfindungsgemäße elektrische Steuergerät ist zum Ausführen, insbesondere zum automatischen Ausführen, des zuvor beschriebenen Verfahrens ausgebildet.

Das elektrische Steuergerät kann die gleichen Vorteile ermöglichen wie das zuvor beschriebene Verfahren. Insbesondere kann das elektrische Steuergerät ganz oder teilweise ausgebildet sein, wie für das Verfahren zuvor beschrieben.

Außerdem bezieht sich die Erfindung auf ein, insbesondere elektrisches, Antriebssystem. Das erfindungsgemäße Antriebssystem weist ein elektrisches Steuergerät und einen Aktor auf, insbesondere einen Elektromotor. Dem Aktor ist das elektrische Steuergerät zum Steuern des Aktors zugeordnet. Das Antriebssystem ist zum Ausführen, insbesondere zum automatischen Ausführen, des zuvor beschriebenen Verfahrens ausgebildet.

Das Antriebssystem kann die gleichen Vorteile ermöglichen wie das zuvor beschriebene Verfahren. Insbesondere kann das elektrische Steuergerät ganz oder teilweise ausgebildet sein, wie für das Verfahren zuvor beschrieben. Das Antriebssystem kann ganz oder teilweise ausgebildet sein, wie für das Verfahren zuvor beschrieben.

Zusätzlich kann das Antriebssystem einen Sensor aufweisen. Dem Sensor kann das Steuergerät und zusätzlich der Aktor zugeordnet sein. Insbesondere kann das Steuergerät dazu ausgebildet sein, in Abhängigkeit eines Sensorsignals des Sensors den Aktor zu steuern.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein erfindungsgemäßes Antriebssystem mit einem erfindungsgemäßen elektrischen Steuergerät beim Ausführen eines erfindungsgemäßen Verfahrens,
- Fig.2: eine Paket-Version mit einem Skript und einer Firmware-Version und
- Fig. 3: eine andere Paket-Version mit einem anderen Skript und einer anderen Firmware-Version.

### DETAILLIERTE BESCHREIBUNG DER AUSFÜHRUNGSBEISPIELE

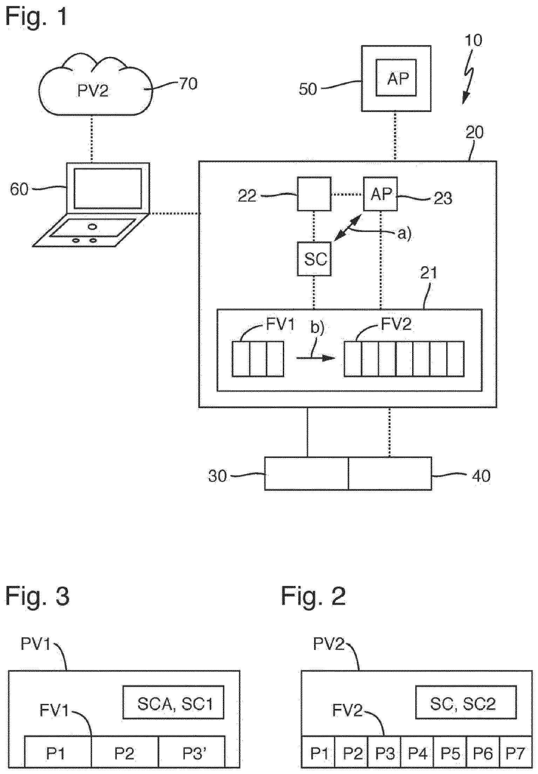

Fig. 1 zeigt ein erfindungsgemäßes, insbesondere elektrisches, Antriebssystem 10. Das Antriebssystem 10 weist ein erfindungsgemäßes elektrisches Steuergerät 20 und einen Aktor 30 in Form eines Elektromotors auf. Dem Aktor 30 ist das elektrische Steuergerät 20 zum Steuern des Aktors 30 zugeordnet. Im Detail ist das Steuergerät 20 mit dem Aktor 30 elektrisch verbunden, wie in Fig. 1 durch eine durchgezogene Linie angedeutet.

Im gezeigten Ausführungsbeispiel ist das elektrische Steuergerät 20 ein Frequenzumrichter. In alternativen Ausführungsbeispielen kann das Steuergerät ein Servoumrichter, ein Motion Controller oder ein Visu-Controller sein.

Zusätzlich weist das Antriebssystem 10 einen Sensor 40 auf. Dem Sensor 40 sind das elektrische Steuergerät 20 und zusätzlich der Aktor 30 zugeordnet. Das Steuergerät 20 ist dazu ausgebildet, in Abhängigkeit eines nicht dargestellten Sensorsignals des Sensors 40 den Aktor 30 zu steuern. Im Detail steht das Steuergerät 20 in Signalverbindung mit dem Sensor 40, wie in Fig. 1 durch eine gepunktete Linie angedeutet.

In alternativen Ausführungsbeispielen kann das Antriebssystem mehr als das eine elektrische Steuergerät aufweisen, insbesondere mindestens zwei, insbesondere mindestens fünf, insbesondere mindestens zehn. Des Weiteren kann das Antriebssystem in alternativen Ausführungsbeispielen mehr als den einen Aktor aufweisen, insbesondere mindestens zwei, insbesondere mindestens fünf, insbesondere mindestens zehn. Außerdem kann das Antriebssystem in alternativen Ausführungsbeispielen mehr als den einen Sensor aufweisen, insbesondere mindestens zwei, insbesondere mindestens fünf, insbesondere mindestens zehn. Dem Steuergerät kann mehr als der eine Aktor zugeordnet sein, beispielsweise für den Fall von so genannten Zwei- oder Mehrachsanwendungen. Weiter kann dem Steuergerät mehr als der eine Sensor zugeordnet sein.

Zudem weist im gezeigten Ausführungsbeispiel das Antriebssystem 10 eine SPS 50 auf, welche mit dem elektrischen Steuergerät 20, beispielsweise über EtherCAT, in Datenverbindung steht, wie in Fig. 1 durch eine gepunktete Linie angedeutet.

Des Weiteren weist im gezeigten Ausführungsbeispiel das Antriebssystem 10 einen Wartungs-PC 60 auf, welcher mit dem Steuergerät 20 in Datenverbindung steht, insbesondere für einen Wechsel auf eine Firmware-Version FV2 auf dem Steuergerät 20. Vor und/oder nach dem Wechsel braucht der Wartungs-PC nicht mit dem Steuergerät in Datenverbindung zu stehen.

Vor dem Wechsel ist in dem Steuergerät 20 eine andere Firmware-Version FV1 gespeichert, insbesondere in einem Speicher 21 in Form eines Flash-Speichers des Steuergeräts 20. Insbesondere ist vor dem Wechsel auf dem Steuergerät 20 die andere Firmware-Version FV1 in Betrieb.

Außerdem ist das elektrische Steuergerät 20 zum Ausführen eines bestehenden Anwendungsprogramms AP in Form eines SPS-basierten Programms zum Betreiben des Antriebssystems 10 geeignet. Im Detail weist das Steuergerät 20 einen Mikroprozessor und/oder ein FPGA 22 zum Ausführen des Anwendungsprogramms AP auf. Im gezeigten Ausführungsbeispiel ist das Anwendungsprogramm AP in dem Steuergerät 20 gespeichert, insbesondere auf einem Wechselspeichermedium 23 in Form einer SD-Karte in dem Steuergerät 20. Zusätzlich ist das Anwendungsprogramm AP auf der SPS 50 gespeichert. In alternativen Ausführungsbeispielen kann es ausreichen, wenn das Anwendungsprogramm entweder auf dem Steuergerät oder der SPS gespeichert sein kann oder ist.

Ein erfindungsgemäßes Verfahren zum Wechseln auf die eine Firmware-Version FV2 auf dem elektrischen Steuergerät 20 für das Antriebssystem 10, wobei das elektrische Steuergerät 20 zum Ausführen des bestehenden Anwendungsprogramms AP zum Betreiben des Antriebssystems 10 geeignet ist und auf dem elektrischen Steuergerät 20 die andere Firmware-Version FV1 in Betrieb ist, weist die Schritte auf: a) Überprüfen des bestehenden Anwendungsprogramms AP auf Kompatibilität mit der einen Firmware-Version FV2 durch ein Skript SC. b) falls das bestehende Anwendungsprogramm AP mit der einen Firmware-Version FV2 kompatibel ist, Wechseln von der anderen Firmware-Version FV1 auf die eine Firmware-Version FV 2 auf dem elektrischen Steuergerät 20.

Das Antriebssystem 10 beziehungsweise sein elektrisches Steuergerät 20 ist zum Ausführen des Verfahrens ausgebildet.

Zusätzlich weist der Schritt a) auf: Überprüfen des elektrischen Steuergeräts 20 auf Kompatibilität mit der einen Firmware-Version FV2 durch das Skript SC. Der Schritt b) weist auf: falls das Steuergerät 20 mit der einen Firmware-Version FV2 kompatibel ist, Wechseln von der anderen Firmware-Version FV1 auf die eine Firmware-Version FV2 auf dem Steuergerät 20.

Im gezeigten Ausführungsbeispiel sind das Anwendungsprogramm AP und das Steuergerät 20 mit der einen Firmware-Version FV2 kompatibel. Es wird von der anderen Firmware-Version FV1 auf die eine Firmware-Version FV2 auf dem Steuergerät 20 gewechselt. Nach dem Wechsel ist die eine Firmware-Version FV2 auf dem Steuergerät 20 in Betrieb und dieses ist zum Ausführen des Anwendungsprogramms AP zum Betreiben des Antriebssystems 10 ausgebildet. Falls das Anwendungsprogramm oder das Steuergerät mit der einen Firmware-Version nicht kompatibel wäre, würde eine Kompatibilitätsproblemmeldung ausgegeben werden, insbesondere mittels des Wartungs-PC.

Im Detail weist das Verfahren den Schritt auf: Bereitstellen einer Paket-Version PV2, wie in Fig. 2 gezeigt. Die eine Paket-Version PV2 weist das Skript SC und die eine Firmware-Version FV2 auf. Der Schritt a) weist auf: Überprüfen durch das bereitgestellte Skript SC. Insbesondere weist das Verfahren den Schritt auf: Übertragen der einen Paket-Version PV2 auf das elektrische Steuergerät 20. Der Schritt a) weist auf: Überprüfen durch das übertragene Skript SC.

Im gezeigten Ausführungsbeispiel wird oder ist die eine Paket-Version PV2 auf einem Server 70 bereitgestellt, welcher mit dem Wartungs-PC 60 in Datenverbindung steht. Die eine Paket-Version PV2 wird von dem Server 70 auf den Wartungs-PC 60 übertragen. Vor und/oder nach dem Übertragen braucht der Wartungs-PC nicht mit dem Server in Datenverbindung zu stehen. Somit wird die eine Paket-Version PV2 auf dem Wartungs-PC 60 bereitgestellt. Die eine Paket-Version PV2 wird von dem Wartungs-PC 60 auf das elektrische Steuergerät 20 übertragen. Somit wird die eine Paket-Version PV2 auf dem elektrischen Steuergerät 20 bereitgestellt. Im Detail wird die eine Paket-Version PV2 beziehungsweise seine eine Firmware-Version FV2 in gepackter Form oder als Binärpaket auf das elektrische Steuergerät 20 übertragen.

Weiter weist das Verfahren den Schritt auf: Wechseln auf das Skript SC in einer Skript-Version SC2, welche der einen Firmware-Version FV2 zugeordnet ist, von einem anderen Skript SCA in einer anderen Skript-Version SC1, welche der anderen Firmware-Version FV1 zugeordnet ist. Der Schritt a) weist auf: Überprüfen durch das Skript SC in der einen Skript-Version SC2.

Im gezeigten Ausführungsbeispiel war vor dem Übertragen der einen Paket-Version PV2 eine andere Paket-Version PV1, welche das andere Skript SCA in der anderen Skript-Version SC1 und die andere Firmware-Version FV1 aufweist, wie in Fig. 3 gezeigt, auf dem elektrischen Steuergerät 20. Mit dem Wechsel auf das Skript SC in der einen Skript-Version SC2 wird das andere Skript SCA in der Skript-Version SC1 von dem elektrischen Steuergerät 20 gelöscht.

Im Detail entspricht die eine Skript-Version SC2 der einen Firmware-Version FV2. Die andere Skript-Version SC1 entspricht der anderen Firmware-Version FV1.

Die eine Firmware-Version FV2 und die andere Firmware-Version FV1 sind in einer Anzahl von Partitionen P1, P2, P3, P4, P5, P6, P7, P3' und einem Inhalt einer der Anzahl von Partitionen P3, P4, P5, P6, P7, P3' voneinander verschieden, wie in Fig. 2 und 3 zu erkennen. In alternativen Ausführungsbeispielen können die eine Firmware-Version und die andere Firmware-Version in der Anzahl von Partitionen und/oder einer Größe einer der Anzahl von Partitionen und/oder einem Zugriffsrecht einer der Anzahl von Partitionen und/oder dem Inhalt einer der Anzahl von Partitionen voneinander verschieden sein.

Im gezeigten Ausführungsbeispiel weist die andere Firmware-Version 1 drei Partitionen P1, P2, P3' auf, beispielsweise SPL, Rescue-System und/oder Produktiv-System. Die eine Firmware-Version weist sieben Partitionen P1, P2, P3, P4, P5, P6, P7 auf, beispielsweise SPL, Rescue-System, Produktiv-Kernel, Produktiv-RFS, FPGA, System und/oder Data. In alternativen Ausführungsbeispielen können/kann die eine Firmware-Version und/oder die andere Firmware-Version jeweils eine einzige, zwei, drei, vier, fünf, sechs, sieben, acht, neun, zehn oder mehr als zehn Partitionen aufweisen.

Zudem ist im gezeigten Ausführungsbeispiel die eine Firmware-Version FV2 höher als die andere Firmware-Version FV1. Das bestehende Anwendungsprogramm AP basiert auf der anderen Firmware-Version FV1. In alternativen Ausführungsbeispielen kann die andere Firmware-Version höher als die eine Firmware-Version sein. Insbesondere kann das bestehende Anwendungsprogramm auf der einen Firmware-Version basieren.

Des Weiteren wird im Schritt a) das Skript SC auf dem elektrischen Steuergerät 20 ausgeführt. Im gezeigten Ausführungsbeispiel wird das Ausführen von dem Wartungs-PC 60 ausgelöst.

Im Detail überprüft das Skript SC, insbesondere zuerst, ob genügend Speicherkapazität für die eine Firmware-Version FV2 neben der anderen Firmware-Version FV1 auf dem elektrischen Steuergerät 20 beziehungsweise seinem Speicher 21 vorhanden ist. Dies ist im gezeigten Ausführungsbeispiel der Fall, da der Speicher 21 beziehungsweise seine Speicherkapazität derart gewählt ist, dass dieser beziehungsweise für deutlich mehr als die beiden Firmware-Versionen ausreichend ist. Insbesondere danach, überprüft das Skript SC das elektrische Steuergerät 20 und, insbesondere zuletzt, das bestehende Anwendungsprogramm AP auf Kompatibilität mit der einen Firmware-Version FV2.

Im Detail braucht im Schritt b) nicht notwendigerweise die eine Firmware-Version FV2 als Ganzes auf den Speicher 21 geschrieben werden. Es kann ausreichen, nur einen Teil der Partitionen der Firmware-Version FV2 auf den Speicher 21 zu schreiben, nämlich diejenigen Partitionen, in welchen die eine Firmware-Version FV2 und die andere Firmware-Version FV1 voneinander verschieden sind. Unveränderte Partitionen der anderen Firmware-Version FV1 können bestehen bleiben und brauchen insbesondere nicht überschrieben zu werden. Im gezeigten Ausführungsbeispiel sind die Partitionen P1, P2 unverändert. Die Partitionen P3, P4, P5, P6, P7 werden neu auf den Speicher 21 geschrieben. Dabei bleibt zunächst die Partition P3' auf dem Speicher 21 bestehen.

Außerdem werden, insbesondere erst, nach Abschluss aller Schreibvorgänge einzelne Partitionen umbenannt. Somit kann beim Auftreten eines Fehlers während des Schreibens, beispielsweise einer Unterbrechung einer Stromzufuhr des elektrischen Steuergeräts 20, ein Risiko verringert oder sogar vermieden werden, dass das Steuergerät 20 unbrauchbar werden kann oder wird. Das Umbenennen erfolgt atomar, das heißt es werden entweder alle umzubenennenden Partitionen umbenannt oder keine. Somit kann ein inkonsistenter Stand zwischen den beiden Firmware-Versionen ausgeschlossen werden.

Weiter wird die andere Firmware-Version FV1 nicht als Ganzes von dem Speicher 21 gelöscht. Es kann ausreichen, nur die Partitionen zu löschen, welche nicht mehr benötigt werden. Im gezeigten Ausführungsbeispiel wird die Partition P3' gelöscht.

Zudem erfolgt ein Neustart des elektrischen Steuergeräts 20, wobei von der einen Firmware-Version FV2 gebootet wird.

Falls der Wechsel erfolgreich war, kann eine Erfolgsmeldung ausgegeben werden, insbesondere mittels des Wartungs-PC 60.

Wie die gezeigten und oben erläuterten Ausführungsbeispiele deutlich machen, stellt die Erfindung ein vorteilhaftes Verfahren zum Wechseln auf eine Firmware-Version auf einem elektrischen Steuergerät für ein Antriebssystem bereit, das Probleme beim Wechsel verringert oder sogar ganz vermeidet und/oder relativ anwenderfreundlich ist, sowie ein elektrisches Steuergerät zum Ausführen des Verfahrens und ein Antriebssystem mit einem elektrischen Steuergerät zum Ausführen des Verfahrens.

## Patentansprüche

1. Verfahren zum Wechseln auf eine Firmware-Version (FV2) auf einem elektrischen Steuergerät (20) für ein Antriebssystem (10), wobei das elektrische Steuergerät (20) zum Ausführen eines bestehenden Anwendungsprogramms (AP) zum Betreiben des Antriebssystems (10) geeignet ist und auf dem elektrischen Steuergerät (20) eine andere Firmware-Version (FV1) in Betrieb ist, wobei das Verfahren die Schritte aufweist:
- a) Überprüfen des bestehenden Anwendungsprogramms (AP) auf Kompatibilität mit der einen Firmware-Version (FV2) durch ein Skript (SC), und
- b) falls das bestehende Anwendungsprogramm (AP) mit der einen Firmware-Version (FV2) kompatibel ist, Wechseln von der anderen Firmware-Version (FV1) auf die eine Firmware-Version (FV2) auf dem elektrischen Steuergerät (20).

2. Verfahren nach Anspruch 1,
- wobei im Schritt a) das Skript (SC) auf dem elektrischen Steuergerät (20) ausgeführt wird.

3. Verfahren nach einem der vorhergehenden Ansprüche,
- wobei das Verfahren den Schritt aufweist: Wechseln auf das Skript (SC) in einer Skript-Version (SC2), welche der einen Firmware-Version (FV2) zugeordnet ist, von einem anderen Skript (SCA) in einer anderen Skript-Version (SC1), welche der anderen Firmware-Version (FV1) zugeordnet ist, und
- wobei der Schritt a) aufweist: Überprüfen durch das Skript (SC) in der einen Skript-Version (SC2).

4. Verfahren nach einem der vorhergehenden Ansprüche,
- wobei das Skript (SC) in einer der einen Firmware-Version (FV2) entsprechenden oder höheren Skript-Version (SC2) ist.

5. Verfahren nach einem der vorhergehenden Ansprüche,
- wobei die eine Firmware-Version (FV2) und die andere Firmware-Version (FV1) in einer Anzahl von Partitionen (P1, P2, P3, P4, P5, P6, P7, P3') und/oder einer Größe einer der Anzahl von Partitionen und/oder einem Zugriffsrecht einer der Anzahl von Partitionen und/oder einem Inhalt einer der Anzahl von Partitionen (P3, P4, P5, P6, P7, P3') voneinander verschieden sind.

6. Verfahren nach einem der vorhergehenden Ansprüche,
- wobei das Verfahren den Schritt aufweist: Bereitstellen einer Paket-Version (PV2), wobei die eine Paket-Version (PV2) das Skript (SC) und die eine Firmware-Version (FV2) aufweist,
- wobei der Schritt a) aufweist: Überprüfen durch das bereitgestellte Skript (SC).

7. Verfahren nach Anspruch 6,
- wobei das Verfahren den Schritt aufweist: Übertragen der einen Paket-Version (PV2) auf das elektrische Steuergerät (20),
- wobei der Schritt a) aufweist: Überprüfen durch das übertragene Skript (SC).

8. Verfahren nach einem der vorhergehenden Ansprüche,
- wobei der Schritt a) aufweist: Überprüfen des elektrischen Steuergeräts (20) auf Kompatibilität mit der einen Firmware-Version (FV2) durch das Skript (SC), und
- wobei der Schritt b) aufweist, falls das elektrische Steuergerät (20) mit der einen Firmware-Version (FV2) kompatibel ist, Wechseln von der anderen Firmware-Version (FV1) auf die eine Firmware-Version (FV2) auf dem elektrischen Steuergerät (20).

9. Verfahren nach einem der vorhergehenden Ansprüche,
- wobei das elektrische Steuergerät (20) ein Frequenzumrichter, ein Servoumrichter, ein Motion Controller oder ein Visu-Controller ist.

10. Elektrisches Steuergerät (20),
- wobei das elektrische Steuergerät (20) zum Ausführen eines Verfahrens nach einem der vorhergehenden Ansprüche ausgebildet ist.

11. Antriebssystem (10), aufweisend:
- ein elektrisches Steuergerät (20) und
- einen Aktor (30), insbesondere einen Elektromotor, wobei dem Aktor (30) das elektrische Steuergerät (20) zum Steuern des Aktors (30) zugeordnet ist,
- wobei das Antriebssystem (10) zum Ausführen eines Verfahrens nach einem der Ansprüche 1 bis 9 ausgebildet ist.
